# EUROPEAN PATENT SPECIFICATION

(11) **EP 1 372 021 B1**
(45) Date of publication and mention of the grant of the patent: **04.12.2013**
(21) Application number: 03251514.0
(22) Date of filing: 12.03.2003
(51) Int. Cl.: G02F 1/1333

(54) **Display apparatus**
Bildanzeigegerät
Dispositif d'affichage

(30) Priority: 11.06.2002 KR 2002032663
(43) Date of publication of application: 17.12.2003
(73) Proprietor: Samsung Electronics Co., Ltd., Suwon-si, Gyeonggi-do, 443-742 (KR)
(72) Inventor: Lim, Seon-woo, Suwon City, Kyungki-do (KR); Sung, Ki-hyub, Suwon City, Kyungki-do (KR)
(74) Representative: Walaski, Jan Filip

(56) References cited:
- EP-A- 1 150 199
- GB-A- 2 336 708
- US-A- 5 450 221
- US-A- 5 479 285
- US-A- 5 946 062
- US-B1- 6 411 352

## Description

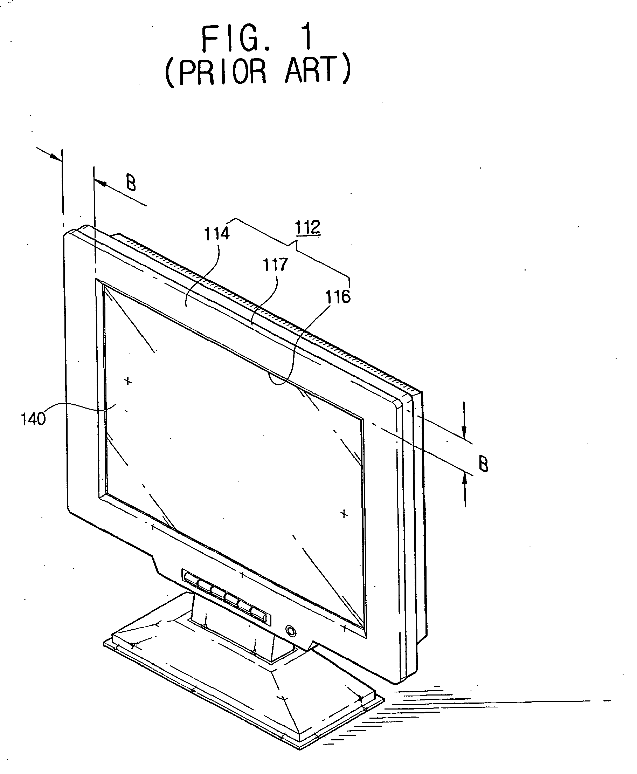

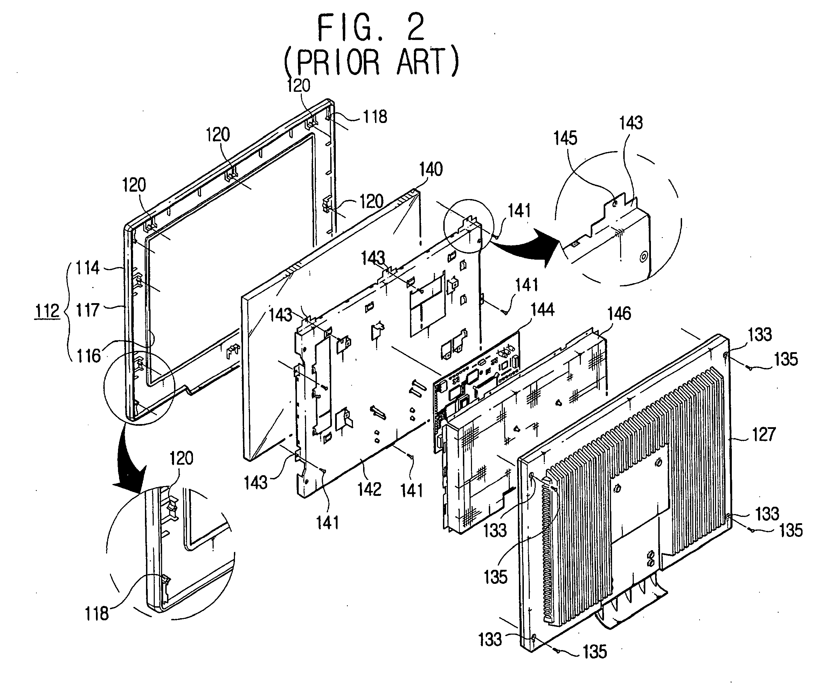

Referring to Figures 1 and 2, a conventional display apparatus comprises a front cover 112, a rear cover 127, connected to the front cover 112 and forming a predetermined accommodating space, an LCD panel 140 having an effective surface on which a picture is displayed, a chassis (or panel supporting member) 142 supporting the LCD panel 140, and a PCB (printed circuit board) assembly 144 supported by a PCB cover 146 and transmitting an electrical signal to the LCD panel 140.

The front cover 112 includes a front part 114 formed with a display opening 116 through which the effective surface of the LCD panel 140 is exposed externally, and a skirt part 117 extending from each edge of the front part 114 and bending toward the rear cover 127.

The rear of the front cover 112 is provided with a plurality of first bosses 118 formed with screw threads therein, respectively, so that first screws 135 are fastened to the first bosses 118 through first through holes 133 formed on the rear cover 127. Further, in positions spaced from the first bosses 118 are provided a plurality of second bosses 120 formed with screw threads therein, respectively, so that second screws 141 are fastened to the second bosses 120 through second through holes 145 formed on flange parts 143 of the chassis 142.

A description of the assembly of a conventional display apparatus, as described above, now follows.

First, the LCD panel 140 is connected to the chassis 142 with the effective surface thereof being disposed toward the front cover 112, and then the second through holes 145 each formed on the flange parts 143 of the chassis 142 are brought to the second bosses 120 formed on the inside of the front cover 112, respectively. Thereafter, the second screws 141 are each fastened to the second bosses 120 through the second through holes 145, so that the chassis 142 and the front cover 112 are connected to each other, with the LCD panel 140 therebetween.

After connecting the front cover 112 and the chassis 142, the PCB assembly 144 is mounted on the chassis 142 and electrically connected to the LCD panel 140. Thereafter, the PCB assembly 144 is covered with the PCB cover 146.

Thereafter, the first through holes 133 formed on the rear cover 127 are brought to the first bosses 118 formed on the front cover 112, and then the first screws 135 are fastened to the first bosses 118 through the first through holes 133, thereby assembling the conventional display apparatus completely.

However, the conventional display apparatus employs screws to connect the front cover 112 and the rear cover 127 as well as the front cover 112 and the chassis 142, making it inconvenient to assemble the display apparatus. Further, in the conventional display apparatus, the PCB cover 146, accommodating the PCB assembly 144, is separate from the chassis 142, so that not only does it take a considerable amount of time to assemble the display apparatus, but also the cost of the materials is high.

Further, in order to connect the chassis 142 to the front cover 112, the chassis 142 must be formed with the flange part 143, and therefore the front part 114 of the front cover 112 should have a width "B" wide enough to accommodate the flange part 143.

Furthermore, a conventional display apparatus does not sufficiently block the electromagnetic interference (EMI) generated by the PCB assembly 144.

Accordingly, it is an object of the present invention to provide a display apparatus as defined in appended claim 1 and which can be assembled or disassembled in a relatively short period of time, and has a slim and compact appearance.

Another object of the present invention is to provide a display apparatus, which has a high EMI shielding effect.

EP 1,150,199, on which the preamble of claim 1 is based, discloses an example of a display apparatus structure designed to exhibit strength towards shocks and in which the number of components is minimised, simplifying installation of the display module.

According to an aspect of the present invention, there is provided a display apparatus according to claim 1.

Optional features are set out in the dependent claims.

Embodiments of the present invention will now be described, by way of example, with reference to Figures 3 to 8 of the accompanying drawings, in which:
Figure 1 is a perspective view of a conventional display apparatus;
Figure 2 is an exploded perspective view of a conventional display apparatus;
Figure 3 is a perspective view of a display apparatus according to an embodiment of the present invention;
Figure 4 is an exploded perspective view of the display apparatus of Figure 3;
Figure 5 is an enlarged perspective view illustrating connection parts between a front cover and the chassis of Figure 4;
Figure 6 is an enlarged perspective view illustrating connection parts between the front cover and the rear cover of Figure 4;
Figure 7 is an exploded perspective view of a display apparatus according to a another embodiment of the present invention; and
Figure 8 is an exploded perspective view of a display apparatus according to yet another embodiment of the present invention.

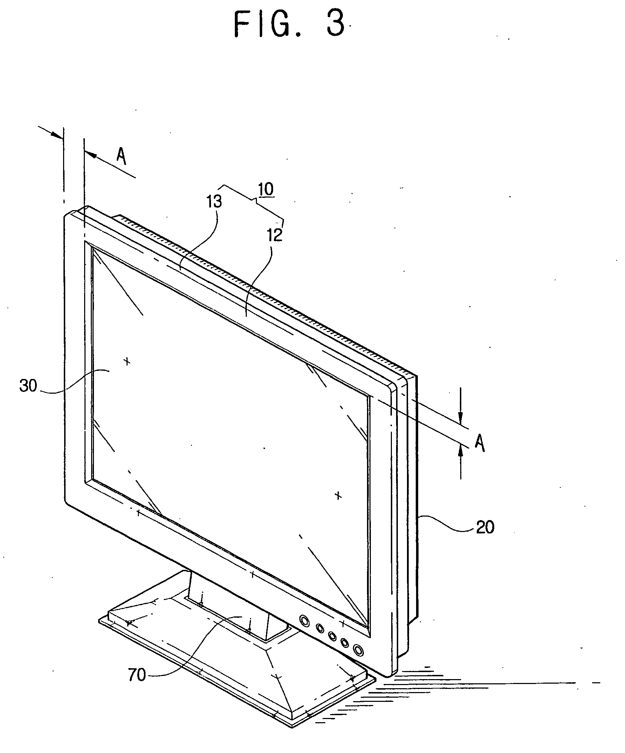

Referring to Figures 3 to 6, a display apparatus according to an embodiment of the present invention comprises an LCD panel 30, a PCB assembly 60 transmitting an electrical signal to the LCD panel 30, a front cover 10 covering the front edges of the LCD panel 30, a chassis (or panel supporting member) 40 connected to the front cover 10, with the LCD panel 30 and the PCB assembly 60 being disposed therebetween, a rear cover 20 connected to the front cover 10 behind the chassis 40, and a stand 70 supporting the assembled components 10, 20, 30, 40 and 60.

The LCD panel 30 displays a picture thereon according to the principle that the molecular arrangement of a liquid crystal is changed by voltage supplied by the PCB assembly 60, so as to polarise light. Hereinafter, the front part of the LCD panel 30, which is exposed externally through the front cover 10 and displays a picture thereon, will be called an effective surface.

The front cover 10 includes a front part 12 formed with a display opening 11 through which the effective surface of the LCD panel 30 is exposed externally, and a skirt part 13 extending from each edge of the front part 12 and bent toward the rear cover 20. The front part 12 covers the edge of the effective surface of the LCD panel 30.

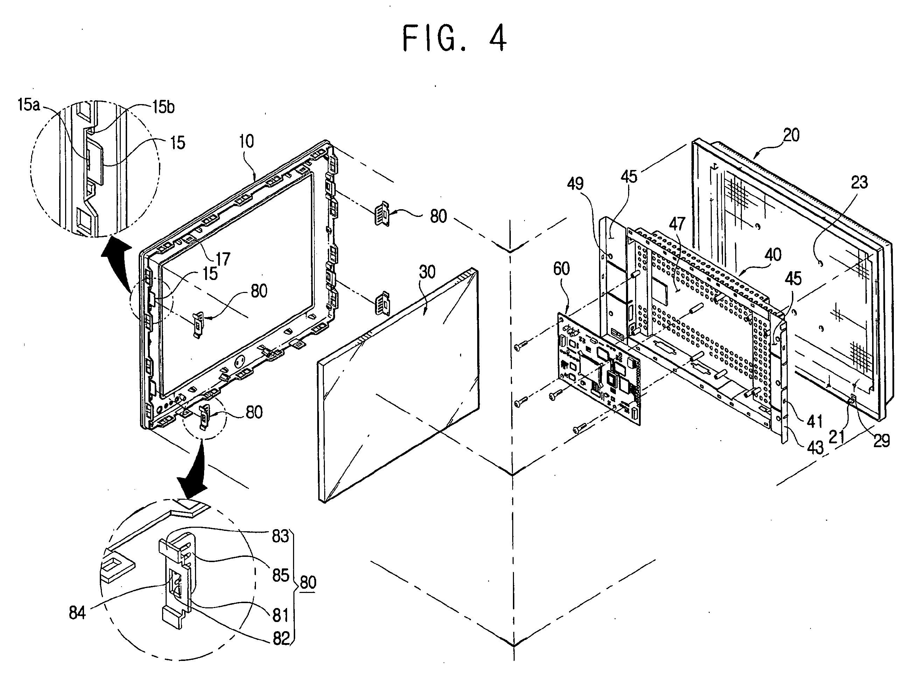

Referring to Figure 4, the rear of the front cover 10 is provided with a plurality of first tab fasteners (or snap pins) 15 protruding therefrom toward the chassis 40 to be fastened to the chassis 40, and a plurality of second tab fasteners (or snap pins) 17 protruding therefrom toward the rear cover 20 to be fastened to a projection 21.

The first tab fastener 15 is provided with a projection receiving aperture (or projection holder) 15a, which receives a projection 82 provided in a reinforcing member 80 (to be described later), and a rib holder 15b is provided adjacent to opposite sides of the first tab fastener 15 for receiving a rib 83 of the reinforcing member 80 to prevent the reinforcing member 80 from breaking away. In the present embodiment, the projection receiving aperture 15a is in the form of a transverse slot on the first tab fastener 15. Alternatively, the projection receiving aperture 15a may have various shapes for receiving the projection 82 of the reinforcing member 80.

Each discrete member of the reinforcing conductive member set 80 includes a ground part 85 contacting the front cover 10, a reinforcing part 81 having an opening 84 thereon, bent from the ground part 85 and extending parallel to the first tab fastener 15, and ribs 83 extending from opposite sides of the reinforcing part 81 and engaging with rib holders 15b so as to prevent the reinforcing conductive member set 80 from breaking away.

The reinforcing part 81 is provided with a projection 82 for insertion into the projection receiving aperture 15a of the first tab fastener 15, so that the reinforcing conductive member set 80 is not only prevented from breaking away but also is reinforced. Further, the reinforcing part 81 is made of an electrically conductive material, and grounds the chassis 40, thereby shielding the LCD panel 30 from electromagnetic waves generated by the PCB assembly 60, i.e. accomplishing an EMI shielding effect.

The ground part 85 has a first surface being in contact with the inside of the front cover 10, and a second surface being in contact with the chassis 40. Like the reinforcing part 81, the ground part 85 is also made of an electrically conductive reinforcing conductive member set 80 functions not only to reinforce the first tab fastener 15 but also to accomplish an EMI shielding effect.

The chassis 40 connects to the front cover 10 with the LCD panel 30 being disposed therebetween and comprises a flange part 43 forwardly bent and a projection 41 formed in the flange part 43 for engaging with the opening 84 of the reinforcing conductive member set 80, and forms a panel housing 45 to house the LCD panel 30. Further, the inside of the panel housing 45 is formed with a PCB housing 47 for housing the PCB assembly 60, thereby facilitating the electrical connection between the LCD panel 30 and the PCB assembly 60, and allowing the display apparatus to be easily assembled and disassembled. Furthermore, the chassis 40 is provided with a supporting projection 49 on the inside surface thereof and facing toward the LCD panel 30, so that the LCD panel 30 is closely supported by the chassis 40 and prevented from becoming loose.

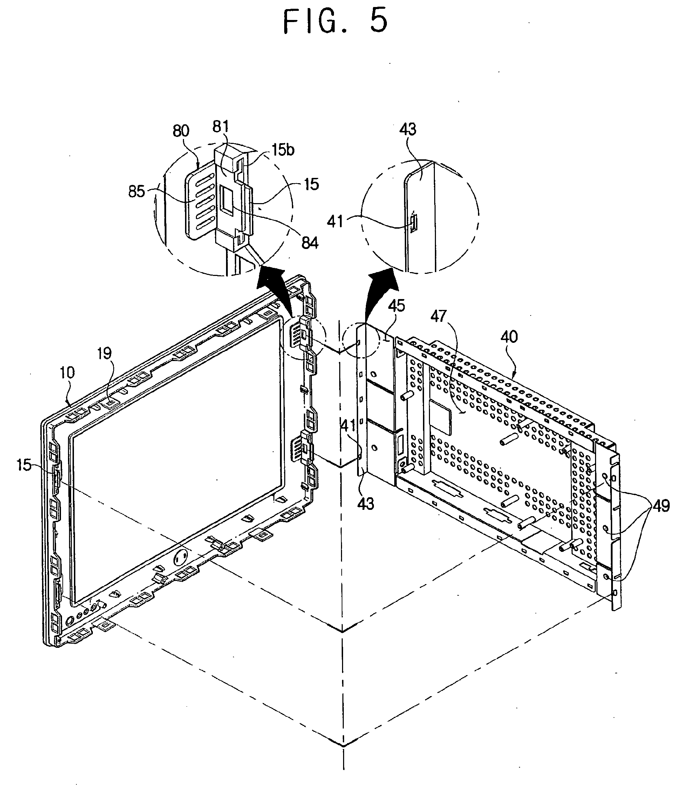

Referring to Figure 5, the projection 41 preferably comprises a snap hook manufactured by press-machining the flange part 43 from the inside to the outside, and is detachably engaged with the opening 84 of the reinforcing conductive member set 80.

The plurality of second tab fasteners 17 are arranged along the circumference edge of the front cover 10, each one being formed with a projection receiving aperture 19 for receiving the projection 21 of the rear cover 20.

In order to reduce the width "A" including the width of the skirt part 13, it is preferable that the first tab fastener 15 and the second tab fastener 17 are positioned where the front part 12 and the skirt part 13 meet each other. Also, in the case that the front cover 10 is manufactured by moulding, the first and second tab fasteners 15 and 17 are preferably formed in the inside of the skirt part 13, thereby increasing the stiffness thereof.

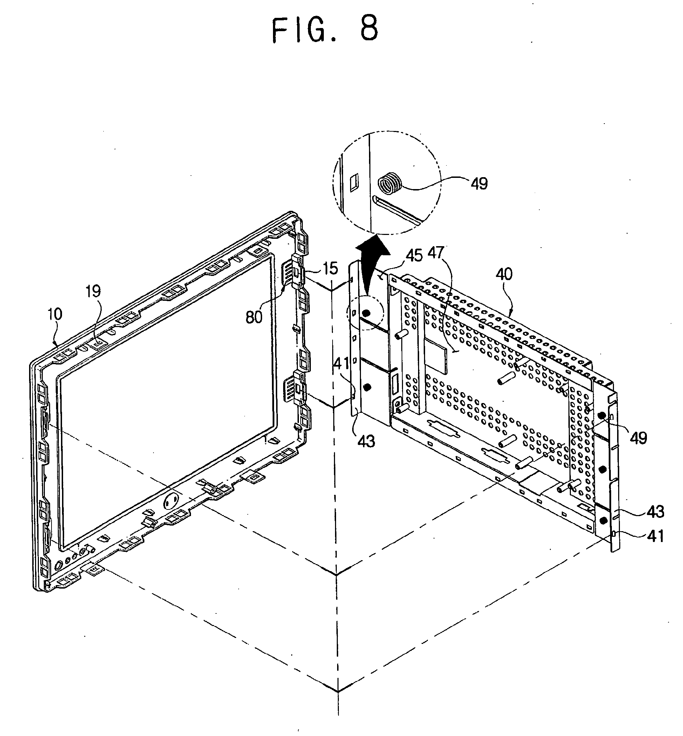

The supporting projection 49 can be manufactured by press-machining the surface of the chassis 40, and has a suitable height depending on the thickness of the LCD panel 30 to support the LCD panel 30. Referring to Figure 8, an elastic member such as a spring can serve as the supporting projection 49.

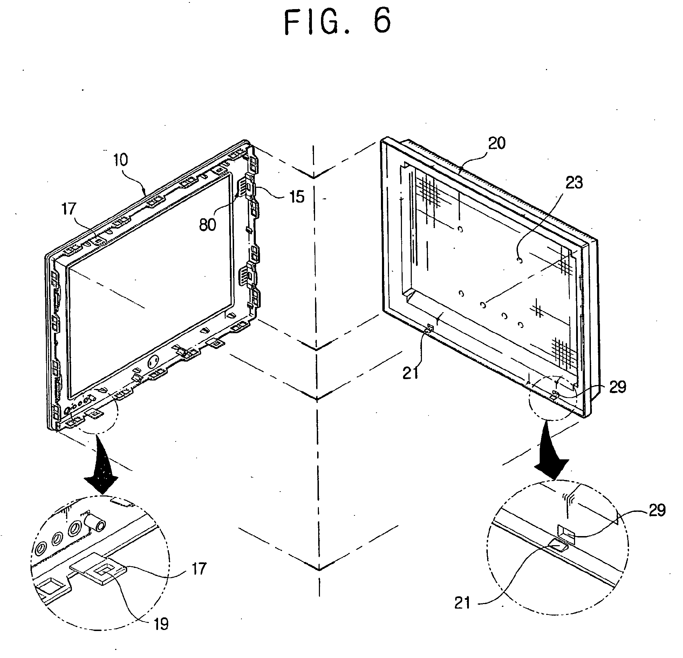

Referring to Figure 6, the rear cover 20, which connects to the front cover 10 so as to form a complete display casing, includes a plurality of air slots 23 provided on the surface of the rear cover 20 and employed to cool the PCB assembly 60, a connector accommodating part (not shown) through which an external device is connected, and the projection 21 provided on the inside margin for engaging with the projection receiving aperture 19 of the second tab fastener 17 of the front cover 10. Herein, the plurality of projections 21 are arranged on the inside margin of the rear cover 20 in correspondence with the second tab fasteners 17, and have a wedge shape so as to be easily snapped by the projection receiving aperture 19 of the second tab fastener 17 when the front cover 10 and the rear cover 20 are connected to each other. Further, the front cover 10 and the rear cover 20, which are connected to each other by the second tab fasteners 17 and the projections 21, are formed with brims fitted to each other, respectively.

On the surface of the rear cover 20 adjacent to the projections 21 are formed release holes 29 for releasing the projections 21 from the second tab fasteners 17. Therefore, a long tool such as a screwdriver can be inserted through the release hole 29.

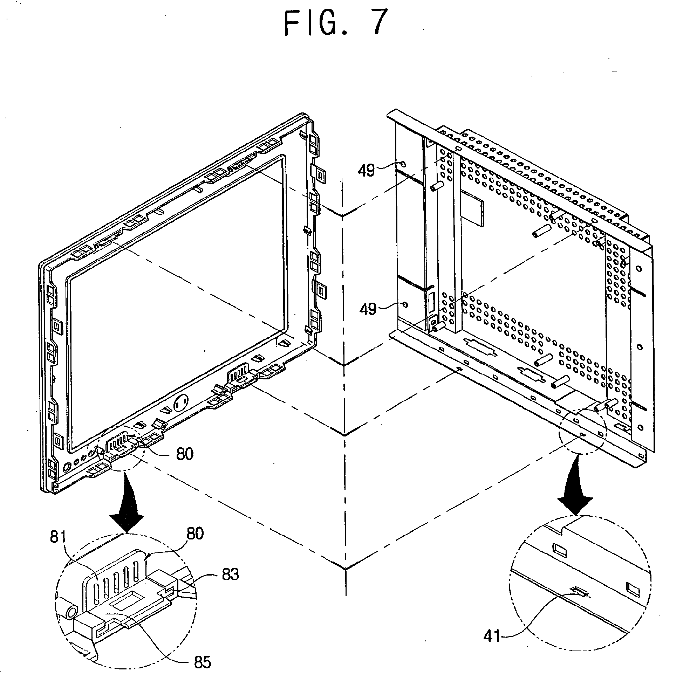

Referring to Figure 7, in an alternative embodiment of the present invention, the first tab fasteners 15 and the second tab fasteners 17 may be switched in positions thereof.

The process of assembling and disassembling the display apparatus according to the present invention will be described below.

In the case of assembling the display apparatus, first, the PCB assembly 60 is housed in and fastened to the PCB housing 47 of the chassis 40, and then the LCD panel 30 is put in and supported by the chassis 40 such that the LCD panel 30 faces Thereafter, the discrete members of the reinforcing conductive member set 80 are connected to the first tab fasteners 15 of the front cover 10, and then the projections 41 of the chassis 40 mounted with the PCB assembly 60 and the LCD panel 30 are snapped into the openings 84 of the discrete members 80 connected to the first tab fasteners 15 of the front cover 10, thereby completing the combination of the front cover 10 and the chassis 40.

Thereafter, the projections 21 of the rear cover 20 are snapped into the projection receiving apertures 19 of the second tab fasteners 17 provided in the front cover 10, thereby completing the display apparatus according to the present invention.

In the case of disassembling the display apparatus, first, a user inserts a long tool, such as a screwdriver, through each release hole 29 formed on the rear cover 20 and releases each projection 21 from each projection receiving aperture 19 of the second tab fasteners 17, so that the rear cover 20 is detached from the front cover 10. Thereafter, a user pushes the projection 41 of the chassis 40 to release the projection 41 out of the opening 84 of each discrete member of the reinforcing conductive member set 80, so that the chassis 40 is detached from the front cover 10.

As described above, because the chassis 40 accommodates both the LCD panel 30 and the PCB assembly 60, a user can check both the LCD panel 30 and the PCB assembly 60 when the chassis 40 is detached from the front cover 10, thereby facilitating repair of the display apparatus.

As described above, each discrete member of the reinforcing conductive member set 80 reinforces the first tab fastener 15 and strengthens the front cover 10, thereby improving the durability of the display apparatus. Further, the reinforcing conductive member set 80 grounds the chassis 40, thereby shielding the LCD panel 30 from electromagnetic waves generated by the PCB assembly 60, i.e. accomplishing an EMI shielding effect. Furthermore, the front cover 10, the chassis 40, and the rear cover 20 are combined without screws, thereby facilitating assembling or disassembling the display apparatus. Moreover, the first and second tab fasteners 15 and 17 occupy a relatively small space, thereby As described above, the present invention provides a display apparatus which is assembled or disassembled in a relatively short time.

Further, the present invention provides a display apparatus which has a slim and compact appearance.

Further, the present invention provides a display apparatus which has an improved EMI shielding effect and improved durability.

It is to be noted that the embodiments of the present invention are not limited to an LCD, but may also be applied to a display (and panel) other than an LCD, and/or an LCD having a panel that also emits radiation causing electromagnetic interference.

## Claims

1. A display apparatus comprising a front cover (10), a display panel (30), a chassis (40), a reinforcing conductive member set (80) engageable with the chassis and a rear cover (20), said chassis (40) being releasably press-fitted to said front cover (10) and said rear cover (20) being releasably press-fitted to said front cover (10),
wherein a first set of tab fastening means (15) is disposed on the front cover (10) and is arranged for connecting the chassis (40) to the front cover (10), each tab fastening means of said first set of tab fastening means having a first projection holder (15a) disposed on the front cover and configured to receive a projection (82) disposed on the reinforcing conductive member set (80), said reinforcing conductive member set being aligned with the first set of tab fastening means (15) such that said reinforcing conductive member set (80) lies between the chassis (40) and the rear face of the front cover (10) and provides an electrical connection between the chassis and the front cover; and
a second set of tab fastening means (17) is disposed on the front cover (10) and is arranged for connecting the front cover (10) to the rear cover (20), each tab fastening means of said second set of tab fastening means having a second projection holder (19) disposed on the front cover and configured to receive a projection (21) disposed on the rear cover (20),
**characterized in that** the reinforcing conductive member set (80) is formed of a plurality of discrete members, each discrete member being positioned so as to be aligned with a respective tab fastening means of the first set of tab fastening means (15).

2. An apparatus according to claim 1, wherein said display panel (30) is adapted to be releasably press-fitted to said chassis (40).

3. An apparatus according to claim 2, including a printed circuit board (60) mounted to the chassis (40) and located between the chassis (40) and the display panel (30).

4. An apparatus according to claim 1, wherein said display panel (30) is an LCD panel.

5. An apparatus according to claim 1, wherein said first and second sets of tab fastening means (15, 17) are disposed around the margin of the rear side of the front cover (10).

6. An apparatus according to any preceding claim, wherein the front cover (10) is arranged to cover a front edge of the display panel,
and wherein the first set of tab fastening means (15) protrudes from the rear of the front cover; the chassis further comprising a flange part (43) having a first projection (41) for engagement with an opening (84) of the reinforcing conductive member set, each discrete member of the reinforcing conductive member set being formed with the opening (84) and having a projection (82) for engagement with the first projection holder (15a) of a respective tab fastening means of the first set of tab fastening means (15).

7. The display apparatus according to claim 6, wherein each discrete member of the reinforcing conductive member set (80) includes:
a ground part (85) having a first surface in contact with the rear surface of the front cover (10) and a second surface in contact with the chassis (40);
a reinforcing part (81) bent from the ground part (85) and extending parallel with a respective tab fastening means of the first set of tab fastening means (15); and
a rib (83) formed at opposite sides of the reinforcing part,
wherein the projection (82) and the opening (84) of each discrete member of the reinforcing member set (80) is provided in the reinforcing part, respectively.

8. The display apparatus according to claim 7, wherein each tab fastening means of the first set of tab fastening means (15) includes a rib holder (15b) engaging with the rib (83) of each discrete member of the reinforcing member set (80) so as to prevent the reinforcing member from breaking away. (41)

9. The display apparatus according to claim 6, wherein the first projection (41) of the flange part (43) comprises a snap hook manufactured by press-machining the flange part.

10. The display apparatus according to claim 6, wherein the chassis (40) includes a supporting projection (49) supporting the display panel.

11. The display apparatus according to claim 10, wherein the supporting projection (49) is formed of an elastic spring.

12. The display apparatus according to claim 6, wherein the chassis is formed with a predetermined housing for accommodating a printed circuit board (60) or the printed circuit board (60) defined in claim 3, insofar as claim 12 depends on claim 3, wherein the printed circuit board is arranged for communicating an electric signal to the LCD panel.

## Patentansprüche

1. Bildanzeigegerät, das eine vordere Abdeckung (10), ein Bildanzeigefeld (30), eine Aufbauplatte (40), einen verstärkenden Leitelementsatz (80), der mit den Aufbauplatten kuppelbar ist, und eine hintere Abdeckung (20)umfasst, wobei die Aufbauplatte (40) mittels Presssitz lösbar an die vordere Abdeckung (10) angebracht ist und die hintere Abdeckung (20) mittels Presssitz lösbar an die vordere Abdeckung (10) angebracht ist,
wobei ein erster Satz von Laschenbefestigungsmitteln (15) an der vorderen Abdeckung (10) angeordnet ist und zur Verbindung der Aufbauplatte (40) mit der vorderen Abdeckung (10) eingerichtet ist, wobei jedes Laschenbefestigungsmittel des ersten Satzes von Laschenbefestigungsmitteln eine erste Vorsprunghalterung (15a) aufweist, die an der vorderen Abdeckung angeordnet und konfiguriert ist, einen Vorsprung (82) aufzunehmen, der am verstärkenden Leitelementsatz (80) angeordnet ist, wobei der verstärkende Leitelementsatz mit dem ersten Satz von Laschenbefestigungsmitteln (15) derart ausgerichtet ist, dass der verstärkende Leitelementsatz (80) zwischen der Aufbauplatte (40) und der Rückfläche der vorderen Abdeckung (10) liegt und eine elektrische Verbindung zwischen der Aufbauplatte und der vorderen Abdeckung bereitstellt; und
ein zweiter Satz von Laschenbefestigungsmitteln (17) an der vorderen Abdeckung (10) angeordnet ist und zur Verbindung der vorderen Abdeckung (10) mit der hinteren Abdeckung (20) eingerichtet ist, wobei jedes Laschenbefestigungsmittel des zweiten Satzes von Laschenbefestigungsmitteln eine zweite Vorsprunghalterung (19) aufweist, die an der vorderen Abdeckung angeordnet und konfiguriert ist, einen an der hinteren Abdeckung (20) angeordneten Vorsprung (21) aufzunehmen,
**dadurch gekennzeichnet, dass** der verstärkende Leitelementsatz (80) aus einer Vielheit diskreter Elemente gebildet ist, wobei jedes diskrete Element positioniert ist, mit einem jeweiligen Laschenbefestigungsmittel des ersten Satzes von Laschenbefestigungsmitteln (15) zu fluchten.

2. Gerät nach Anspruch 1, wobei das Bildanzeigefeld (30) angepasst ist, mit Presssitz lösbar an die Aufbauplatte (40) angebracht zu werden.

3. Gerät nach Anspruch 2, das eine Leiterplatte (60) einschließt, die an die Aufbauplatte (40) montiert ist und sich zwischen der Aufbauplatte (40) und dem Bildanzeigefeld (30) befindet.

4. Gerät nach Anspruch 1, wobei das Bildanzeigefeld (30) ein LCD-Feld ist.

5. Gerät nach Anspruch 1, wobei die ersten und zweiten Sätze von Laschenbefestigungsmitteln (15, 17) um den Rand der Rückseite der vorderen Abdeckung (10) angeordnet sind.

6. Vorrichtung nach einem beliebigen vorangehenden Anspruch, wobei die vordere Abdeckung (10) eingerichtet ist, eine Vorderkante des Bildanzeigefelds abzudecken,
und, wobei der erste Satz von Laschenbefestigungsmitteln (15) aus der Rückseite der vorderen Abdeckung herausragt; die Aufbauplatte weiter ein Flanschteil (43) umfasst, das einen ersten Vorsprung (41) zur Kupplung mit einer Öffnung (84) des verstärkenden Leitelementsatzes aufweist, wobei jedes diskrete Element des verstärkenden Leitelementsatzes mit einer Öffnung (84) gebildet ist und einen Vorsprung (82) zur Kupplung mit der ersten Vorsprunghalterung (15a) eines jeweiligen Laschenbefestigungsmittels des ersten Satzes von Laschenbefestigungsmitteln (15) aufweist.

7. Bildanzeigegerät nach Anspruch 6, wobei jedes diskrete Element des verstärkenden Leitelementsatzes (80) einschließt:
ein Erdungsteil (85) mit einer ersten Oberfläche in Kontakt mit der hinteren Oberfläche der vorderen Abdeckung (10) und einer zweiten Oberfläche in Kontakt mit der Aufbauplatte (40);
ein Verstärkungsteil (81), das aus dem Erdungsteil (85) gebogen ist und sich parallel mit einem jeweiligen Laschenbefestigungsmittel des ersten Satzes von Laschenbefestigungsmitteln (15) erstreckt; und
eine Rippe (83), die an entgegengesetzten Seiten des Verstärkungsteils gebildet ist,
wobei der Vorsprung (82) und die Öffnung (84) jedes diskreten Elements des verstärkenden Elementsatzes (80) jeweils im Verstärkungsteil bereitgestellt sind.

8. Bildanzeigegerät nach Anspruch 7, wobei jedes Laschenbefestigungsmittel des ersten Satzes von Laschenbefestigungsmitteln (15) eine Rippenhalterung (15b) einschließt, die sich mit der Rippe (83) jedes diskreten Elements des verstärkenden Elementsatzes (80) kuppelt, um das Wegbrechen des Verstärkungselements zu verhindern.

9. Bildanzeigegerät nach Anspruch 6, wobei der erste Vorsprung (41) des Flanschteils (43) einen Schnapphaken umfasst, der durch Pressbearbeitung des Flanschteils hergestellt wird.

10. Bildanzeigegerät nach Anspruch 6, wobei die Aufbauplatte (40) einen Stützvorsprung (49) zum Stützen des Bildanzeigefelds einschließt.

11. Bildanzeigegerät nach Anspruch 10, wobei der Stützvorsprung (49) aus einer Sprungfeder gebildet ist.

12. Bildanzeigegerät nach Anspruch 6, wobei die Aufbauplatte mit einem vorgegebenen Gehäuse zur Aufnahme einer Leiterplatte (60) oder der Leiterplatte (60), wie in Anspruch 3 definiert, gebildet ist, insofern wie der Anspruch 12 vom Anspruch 3 abhängt, wobei die Leiterplatte für die Kommunikation eines elektrischen Signals an das LCD-Feld eingerichtet ist.

## Revendications

1. Appareil d'affichage comprenant un couvercle frontal (10), un panneau d'affichage (30), un châssis (40), un jeu d'éléments conducteurs de renforcement (80) engageable avec le châssis et un couvercle arrière (20), ledit châssis (40) étant monté par pression avec faculté de détachement audit couvercle frontal (10) et ledit couvercle arrière (20) étant monté par pression avec faculté de détachement audit couvercle frontal (10),
dans lequel un premier jeu de moyens de languettes de fixation (15) est disposé sur le couvercle frontal (10) et agencé pour connecter le châssis (40) au couvercle frontal (10), chaque moyen de languette de fixation dudit premier jeu de moyens de languettes de fixation ayant un premier support de projection (15a) disposé sur le couvercle frontal et configuré pour recevoir une projection (82) disposée sur le jeu d'éléments conducteurs de renforcement (80), ledit jeu d'éléments conducteurs de renforcement étant aligné avec le premier jeu de moyens de languettes de fixation (15) de telle sorte que ledit jeu d'éléments conducteurs de renforcement (80) repose entre le châssis (40) et la face arrière du couvercle frontal (10) et établisse une connexion électrique entre le châssis et le couvercle frontal ; et
un second jeu de moyens de languettes de fixation (17) est disposé sur le couvercle frontal (10) et agencé pour connecter le couvercle frontal (10) au couvercle arrière (20), chaque moyen de languette de fixation dudit second jeu de moyens de languettes de fixation ayant un second support de projection (19) disposé sur le couvercle frontal et configuré pour recevoir une projection (21) disposée sur le couvercle arrière (20),
**caractérisé en ce que** le jeu d'éléments conducteurs de renforcement est formé d'une pluralité d'éléments discrets, chaque élément discret étant positionné de manière à être aligné avec un moyen de languette de fixation respectif du premier jeu de moyens de languettes de fixation (15).

2. Appareil selon la revendication 1, dans lequel ledit panneau d'affichage (30) est adapté pour être monté par pression avec faculté de détachement audit châssis (40).

3. Appareil selon la revendication 2, comportant une carte à circuit imprimé (60) montée sur le châssis (40) et située entre le châssis (40) et le panneau d'affichage (30).

4. Appareil selon la revendication 1, dans lequel ledit panneau d'affichage (30) est un panneau d'affichage à cristaux liquides (LCD).

5. Appareil selon la revendication 1, dans lequel lesdits premier et second jeux de moyens de languettes de fixation (15, 17) sont disposés autour de la marge du côté arrière du couvercle frontal (10).

6. Appareil selon l'une quelconque des revendications précédentes, dans lequel le couvercle frontal (10) est agencé pour couvrir un bord frontal du panneau d'affichage,
et dans lequel le premier jeu de moyens de languettes de fixation (15) fait saillie depuis l'arrière du couvercle frontal ; le châssis comprenant en outre une partie de bride (43) ayant une première projection (41) destinée à s'engager avec une ouverture (84) du jeu d'éléments conducteurs de renforcement, chaque élément discret du jeu d'éléments conducteurs de renforcement étant formé avec l'ouverture (84) et ayant une projection (82) destinée à s'engager avec le premier support de projection (15a) d'un moyen de languette de fixation respectif du premier jeu de moyens de languettes de fixation (15).

7. Appareil d'affichage selon la revendication 6, dans lequel chaque élément discret du jeu d'éléments conducteurs de renforcement (80) comporte :
une pièce de masse (85) ayant une première surface en contact avec la surface arrière du couvercle frontal (10) et une seconde surface en contact avec le châssis (40) ;
une pièce de renforcement (81) fléchie depuis la pièce de masse (85) et s'étendant parallèlement à un moyen de languette de fixation respectif du premier jeu de moyens de languette de fixation (15) ; et
une nervure (83) formée au niveau de côtés opposés de la pièce de renforcement,
dans lequel la projection (82) et l'ouverture (84) de chaque élément discret du jeu d'éléments de renforcement (80) est fournie dans la pièce de renforcement, respectivement.

8. Appareil d'affichage selon la revendication 7, dans lequel chaque moyen de languette de fixation du premier jeu de moyens de languettes de fixation (15) comporte un support de nervure (15b) s'engageant avec la nervure (83) de chaque élément discret du jeu d'éléments de renforcement (80) de manière à empêcher l'élément de renforcement de se rompre.

9. Appareil d'affichage selon la revendication 6, dans lequel la première projection (41) de la partie de bride (43) comprend un mousqueton usiné par usinage à la presse de la pièce de bride.

10. Appareil d'affichage selon la revendication 6, dans lequel le châssis (40) comporte une projection de support (49) qui supporte le panneau d'affichage.

11. Appareil d'affichage selon la revendication 10, dans lequel la projection de support (49) est formée par un ressort élastique.

12. Appareil d'affichage selon la revendication 6, dans lequel le châssis est formé avec un boîtier prédéterminé pour recevoir une carte à circuit imprimé (60) ou la carte à circuit imprimé (60) définie à la revendication 3, dans la mesure où la revendication 12 dépend de la revendication 3, la carte à circuit imprimé étant agencée pour communiquer un signal électrique au panneau LCD.
